# FASCICULE DE BREVET EUROPEEN

(11) **EP 3 371 249 B1**
(45) Date de publication et mention de la délivrance du brevet: **01.09.2021**
(21) Numéro de dépôt: 16829287.8
(22) Date de dépôt: 23.12.2016
(51) Int. Cl.: B29C 70/60, B29C 70/66, B29C 70/00, B29C 45/00, C08J 5/10, C08K 7/02, C08K 7/14, B29K 105/16, B29K 105/12, C08J 3/20, C08J 5/04

(54) **MATÉRIAU DESTINÉ A L'INJECTION POUR MOULAGE, A BASE DE MATIÈRE THERMOPLASTIQUE, BILLES DE VERRE CREUSES ET FIBRES, PROCÉDÉ DE FABRICATION ET UTILISATION D'UN TEL MATÉRIAU**
MATERIAL ZUM SPRITZGIESSEN MIT THERMOPLASTISCHEM MATERIAL, HOHLEN GLASPERLEN UND FASERN, VERFAHREN ZUR HERSTELLUNG DAVON UND VERWENDUNG SOLCH EINES MATERIALS
MATERIAL FOR INJECTION MOULDING, COMPRISING THERMOPLASTIC MATERIAL, HOLLOW GLASS BEADS AND FIBRES, METHOD FOR THE PRODUCTION THEREOF AND USE OF SUCH A MATERIAL

(30) Priorité: 21.01.2016 FR 1650499
(43) Date de publication de la demande: 12.09.2018
(73) Titulaire: Plastiques du Val de Loire, 37130 Langeais (FR)
(72) Inventeur: TONEGUZZO, Philippe, 37500 Ballan Miré (FR); MANCEAU, Dominique, 37540 Saint cyr sur loire (FR)
(74) Mandataire: Ipside
(86) Numéro de dépôt international: PCT/FR2016/053663
(87) Numéro de publication internationale: WO 2017/125654

(56) Documents cités:
- EP-A2- 0 390 147
- EP-A2- 0 390 148
- DATABASE WPI Week 200766 2007 Thomson Scientific, London, GB; AN 2007-703968 XP002761513, & JP 2007 191540 A (NISSAN MOTOR CO LTD) 2 août 2007 (2007-08-02)

## Description

L'invention concerne un matériau destiné à l'injection pour moulage, ainsi qu'un procédé de fabrication et l'utilisation d'un tel matériau.

Plus particulièrement, l'invention vise à fabriquer des pièces allégées et résistantes, à base de matière thermoplastique et de billes de verre creuses, et de fibres.

L'invention sera plus particulièrement décrite au regard de l'utilisation de fibres de carbone en vue d'obtenir des propriétés de hauts modules mécaniques, sans toutefois y être limitée et pourra s'appliquer à un matériau à billes de verre et autres types de fibres, telles que des fibres naturelles du type de cellulose, bois, chanvre, miscanthus, noyaux d'olive, etc.

Le matériau injectable de l'invention est utilisé pour la production de pièces destinées à l'automobile ou à toute industrie recherchant des matériaux concourant à l'allègement de pièces.

La réduction du poids des véhicules automobiles est une voie développée par les constructeurs afin notamment de réduire la consommation des carburants d'origine fossile des véhicules et par conséquent réduire les émissions de gaz à effets de serre (CO₂).

Depuis quelques années, afin de réduire le poids des véhicules, il est connu de remplacer des pièces de structure en acier par des matériaux composites renforcés en fibres de verre ou de carbone.

Au regard des pièces plastiques intérieures ou extérieures sur véhicules, il est également connu de fabriquer ces pièces à partir d'un matériau plastique moussé. Ce matériau moussé est obtenu par l'action d'un gaz dans une matière plastique pendant sa transformation. Il peut être obtenu par différentes techniques, soit par l'introduction d'un gaz lorsque la matière plastique est fondue (moussage physique), soit par l'addition à la matière plastique encore solide, d'agents gonflants ou moussants qui se décomposent sous forme gazeuse lors de la transformation de la matière plastique, sous l'effet de la température (moussage chimique)..

Un procédé de moulage par injection produisant ce type de matériau moussé, par voie physique, est par exemple connu sous le nom de technologie MuCell®.

Une autre solution d'allègement de matières plastiques consiste à incorporer dans la matière plastique des charges moins denses que les polymères constitutifs de la matière plastique, appelées charges ultralégères, telles que des charges organiques, par exemple des billes de polymère chargées de gaz comprimé, ou des charges naturelles, par exemple des fibres de bois, de lin ou de chanvre.

Il est également connu d'ajouter en tant que charges, des charges minérales que sont des billes de verre creuses.

L'incorporation de ce type de charges ultralégères dans une matière thermoplastique est réalisée par extrusion. Cette technologie consiste à faire fondre de la matière thermoplastique dans une extrudeuse de type mono ou double vis par exemple, puis à incorporer en continu les billes de verre creuses, et éventuellement d'autres charges, des additifs et des colorants. Une filière en sortie d'extrudeuse permet de pousser la matière extrudée. Cette dernière est sectionnée afin d'obtenir un produit sous forme de granulés qui seront utilisés ultérieurement comme matière première lors de la fabrication des pièces moulées par injection.

Les billes de verre apportent la légèreté au matériau mais le fragilisent en affectant la tenue à l'impact du produit moulé avec ce matériau. De plus, leur seule présence dans le matériau polymère ne permet pas d'obtenir une rigidité du produit équivalente à celle des produits non allégés, car ces charges, de par leur morphologie sphérique, n'ont aucune propriété structurante.

Par tenue à l'impact, on entend la résistance aux chocs du type Izod (norme ISO 180) ou de type Charpy (ISO 179).

Pour certaines pièces en plastique d'un véhicule automobile, la rigidité nécessaire pour la fonction recherchée peut dépasser 10 000 MPa. Cette valeur de rigidité est obtenue pour des pièces non allégées avec des polypropylènes chargés à 50% en fibres de verre ou des polyamides 6 ou 66 (PA6 ou PA66) chargés à 30% en fibres de verre. Or, ce même type de matrice plastique en PP ou PA chargée en billes de verre creuses pour fournir des pièces allégées ne permet d'obtenir une valeur au mieux de 1 000 MPa pour une base PP et 3 000 MPa pour une base PA6 ou PA66.

C'est pourquoi, afin d'augmenter la rigidité du produit dans le but d'obtenir un matériau dont la rigidité est équivalente à celle des matériaux habituellement utilisés dans des domaines d'application tels que celui de l'automobile, il est connu d'ajouter aux billes de verre creuses, des charges structurantes, telle que des fibres de carbone.

Cependant, les contraintes de friction entre les billes de verre creuses et les charges structurantes lors du procédé d'extrusion entrainent de nombreuses casses parmi les billes de verre. Les performances d'allègement du produit sont donc réduites fortement lorsque les billes creuses sont partiellement ou totalement détruites lors de l'extrusion.

Afin de résoudre ces inconvénients, il est connu d'utiliser la technologie d'extrusion dite BUSS.

La technologie BUSS consiste à alimenter l'extrudeuse en matière à transformer et mélanger au niveau d'une vis sans fin associée à un fourreau qui est située perpendiculairement à l'alimentation de matière. Puis, comme pour les systèmes conventionnels, la vis sans fin convoie le composé jusqu'à la filière. Cette technologie permet, par la séparation physique des phases de mélange et de convoyage, de limiter la zone de malaxage, et ainsi, de réduire les contraintes en cisaillement de sorte à limiter la casse des billes de verre creuses.

Le brevet européen EP1012504B1 décrit un matériau injectable de matière plastique et de billes de verre creuses produit par la technologie d'extrusion BUSS, dans le but de fabriquer des pièces de véhicule automobile.

Ce brevet divulgue également l'ajout de fibres de carbone dans le composé pour constituer les charges structurantes dans la pièce finale moulée. Les fibres de carbone sont mélangées à la matière plastique et aux billes de verre creuses lors du procédé d'extrusion par la technologie BUSS.

Par ailleurs, la demande de brevet JP2007191540 décrit un matériau composite, fabriqué par extrusion, composé d'une matrice thermoplastique, de billes de verre creuses et de fibres de carbone, intégrant des composés aromatiques ou aliphatiques. Les fibres de carbone sont ajoutées lors de la fabrication du composé par extrusion. Les composés aromatiques ou aliphatiques limitent la casse des billes en se liant aux fibres de carbone (formation d'un revêtement lubrifiant) qui permet de limiter les contraintes de friction.

Enfin, si la problématique de la casse des billes de verre creuses se situe principalement lors de la fabrication par extrusion du matériau, elle se retrouve également au niveau de l'injection du matériau lors du moulage des pièces. En effet, la technologie d'injection lors du moulage de pièces nécessite des niveaux de pression de l'ordre de 1000 bars ou plus, ce qui favorise la casse des billes de verre creuses.

D'autres exemples de matériau composite et de méthode de l'art antérieur sont décrits dans les demandes de brevet EP0390147 et EP0390148.

L'invention vise donc à proposer une alternative à ces solutions pour éviter, ou à tout le moins limiter, la casse des billes de verre creuses lors du procédé de fabrication du matériau et lors de l'injection, et fournir un produit moulé allégé, et si besoin de rigidité et de tenue aux chocs équivalentes à ceux habituellement utilisés en particulier dans le domaine de l'automobile, et avec des niveaux d'allègement pouvant atteindre 20% à 30%.

A cette fin, l'invention vise un procédé de fabrication d'un matériau destiné à l'injection plastique, selon la revendication 1.

L'invention vise également un matériau destiné à l'injection plastique, comportant de la matière thermoplastique, des billes de verre creuses et des fibres, selon la revendication 3.

Le matériau destiné à l'injection plastique comportant de la matière thermoplastique, des billes de verre creuses et des charges sous la forme de fibres, consiste en un mélange de deux composés distincts, un premier composé sous forme de granulés obtenus par extrusion, de préférence par extrusion selon le procédé BUSS, et comprenant de la matière thermoplastique (matrice de matière thermoplastique) et des billes de verre creuses, et un second composé sous forme de granulés comprenant de la matière thermoplastique chargée en fibres.

On entend par matière thermoplastique tout matériau thermoplastique ou toute combinaison de matériaux thermoplastiques, de préférence semi cristallin ou même amorphe. Des matériaux thermoplastiques amorphes tels que acrylonitrile butadiène styrène et polyamide (ABS PA), ou acrylonitrile butadiène styrène et polycarbonate (ABS PC) peuvent être utilisés mais ne sont pas privilégiés lorsque les pièces fabriquées doivent présenter une forte tenue à l'impact.

Les inventeurs ont mis en évidence de manière surprenante qu'en fabriquant séparément les deux composés, l'un à base des billes de verre et l'autre à base de fibres, en particulier de fibres de carbone, et en les mélangeant ultérieurement, au contraire de l'art antérieur qui mélange les charges structurantes lors de la fabrication par extrusion de la matière thermoplastique avec les billes de verre, le taux de casse des billes de verre creuses est réduit.

Les billes de verre creuses utilisées sont choisies de manière avantageuse parmi des billes de densité comprise entre 0,6 et 0,45 et de préférence de l'ordre de 0,46 pour privilégier la performance d'allègement pour un taux d'incorporation volumique donné.

A titre d'exemple, les billes de verre creuses utilisées sont commercialisées par la société 3M sous la référence iM16K et iM30K, de préférence iM16K.

Les billes de verre pourront être choisies en fonction du type de procédé d'injection employé, et donc selon le niveau de pression utilisé. En effet, l'injection classique impose une pression de l'ordre de 1000 bar, il sera alors préférable d'utiliser des billes de verre qui sont commercialisées en présentant une tenue de résistance à la pression d'au moins 1000 bar, tandis que l'injection selon la technologie dite MuCell® n'implique qu'une pression de l'ordre de 500 bar.

La teneur en billes de verre creuses est fixée entre 15 et 30% massique de la matière thermoplastique constituant la matrice du premier composé, de manière préférée entre 20 et 25% et de manière encore plus préférée à 22% massique. Les inventeurs ont mis en évidence que les performances d'allègement et l'impact économique sont optimisés tout en ayant un taux de casse minimisé.

Avantageusement, une teneur en billes de verre creuses fixée à 22% massique dans le premier composé permet la production de pièces allégées de 20 à 30% par rapport aux pièces usuelles, suivant la matière à remplacer, pour des propriétés mécaniques identiques au produit à substituer.

Actuellement, selon la destination des produits, les matériaux utilisés de l'art antérieur sont sélectionnés par les constructeurs de manière adaptée pour atteindre les performances souhaitées en termes notamment de propriétés mécaniques. Aussi, pour le premier composé du matériau de l'invention, on utilise la même base thermoplastique que celle du produit à remplacer. La proportion du premier composé et celle d'addition du second composé contenant les fibres sont calculées de manière connue en fonction du type de matériau à remplacer, afin de fournir un produit allégé et parvenir aux mêmes performances mécaniques ou propriétés souhaitées. Les fibres du second composé sont des charges qui, soit lorsqu'elles sont en carbone, confèrent au produit final allégé des propriétés de rigidité mécanique, soit lorsqu'elles sont végétales, procurent un produit allégé dit « vert ». En effet, de plus en plus, lorsque la fonction de rigidité mécanique n'est pas en soi essentielle, il est alors recherché un produit qui est le moins nocif pour l'environnement au regard de sa fabrication et son recyclage.

Les fibres végétales sont par exemple du type fibres de cellulose, bois, chanvre, miscanthus, noyaux d'olive, etc.

Quelle que soit la nature des fibres, le procédé de fabrication de l'invention permet que la présence de fibres dans le matériau final n'induit pas une augmentation du taux de casse des billes de verre.

Au regard des performances mécaniques, celles-ci sont en particulier définies par le module de flexion (ou parfois de traction), par la résistance aux chocs (qui se traduit en mesurant l'énergie aux chocs ou dite encore énergie d'impact) et par la contrainte à la rupture.

Selon une caractéristique, la matière thermoplastique du premier composé est composée de matériaux pris seuls ou en combinaison, tels que du polypropylène homopolymère ou copolymère (PP homo ou PP copo), du polyamide 6 ou 66 (PA6 ou PA66), ou tout autre matrice de matériau thermoplastique, de préférence semi cristallin, ou amorphe tel qu'à base de acrylonitrile butadiène styrène et polyamide (ABS PA), ou de l'acrylonitrile butadiène styrène et polycarbonate (ABS PC).

Le matériau du premier composé présente avantageusement une énergie d'impact définie selon la norme aux chocs Izod à 23°C sur éprouvettes entaillées) comprise entre 2 et 5 kJ/m² pour un PP homo, de préférence de 5 kJ/m² pour un PP homo, entre 10 et 15,8 kJ/m² pour un PP copo, de préférence de 15,8 kJ/m² pour un PP copo , entre 3 et 10 kJ/m² pour un PA6 ou pour un PA66, de préférence de 10 kJ/m² pour un PA6, ou un PA66.

Selon une caractéristique, le module de flexion de la matière plastique (matrice) du premier composé est compris entre 800 et 1 000 MPa et de préférence de 900 MPa pour un PP copo, entre 1 200 MPa et 1 600 MPa et de préférence de 1 500 MPa pour un PP homo, entre 2 500 MPa et 3 200 MPa et de préférence de 3 000 MPa pour un PA6, et entre 2 500 MPa et 3 200 MPa et de préférence de 3 000 MPa pour un PA66.

Selon une autre caractéristique, le matériau comporte avantageusement entre 40 et 99 % du premier composé et entre 1 et 60 % du second composé, les taux dépendront de la nature de la matière à substituer pour parvenir à un produit allégé et présentant selon les applications un module de flexion ou de traction équivalent à celui de la matière à substituer. Un tel matériau aura les propriétés requises au regard de l'énergie d'impact et de la contrainte à la rupture. A titre d'exemple, le matériau comprend entre 70 et 80 % du premier composé et entre 20 et 30% du second composé pour une matrice pour les deux composés en PA6 ou PA66, et entre 65 et 95 % du premier composé et entre 5 et 35 % du second composé pour une matrice pour les deux composés en PP homo ou PP copo.

La matière thermoplastique du premier composé et/ou du second composé, comprend des additifs de type connu (ajoutés lors de la fabrication de ladite matière thermoplastique) pour présenter des propriétés fonctionnelles, telles que nécessaires pour une utilisation pour une application automobile, en particulier telles que la tenue aux ultraviolets, à l'oxydation ou de tenue thermique, d'hydrolyse ou de résistance aux chocs, ou encore permettre la coloration du produit moulé final.

Les additifs tels que les additifs dits « interfaciaux » et agents de modification de la résistance au choc (dont le terme anglais est « impact modifiers ») permettent d'améliorer les propriétés mécaniques à l'impact du produit final. Les additifs interfaciaux ont pour fonction de renforcer la compatibilité entre les microsphères de verre creuses et les matrices polymères. La présence d'additifs interfaciaux et d'impact modifiers est nécessaire dans le premier composé pour atteindre les niveaux de tenue aux chocs exigés pour une application automobile. Les additifs sont sous forme solide lorsqu'ils sont ajoutés pour la fabrication du premier composé, et plus particulièrement sous forme de poudre, de granulés ou de balles de caoutchouc ou encore d'élastomères.

La teneur pour un additif de colorant ajouté dans le premier composé est de préférence de 4% massique par rapport à la masse du composé, pour une teneur en billes de 22% massique, pour permettre de teinter de manière homogène le produit moulé.

On entend par produit final, les pièces moulées incorporant le matériau de l'invention.

La teneur de chaque additif est avantageusement comprise entre 4% et 8%, par rapport à la masse du composé contenant l'additif.

De préférence, la quantité totale d'additifs dans le premier composé est comprise entre 10% et 15%. Cette quantité totale est de préférence limitée à 17% massique par rapport à la masse dudit composé.

De manière avantageuse, la quantité d'additifs interfaciaux est d'au plus 5%, par rapport à la masse du composé contenant l'additif, tandis que la quantité d'impact modifiers est fonction de la tenue au choc souhaitée, de préférence de l'ordre de 8% par rapport à la masse du composé le contenant pour un compromis technico-économique.

Cela permet d'optimiser les propriétés mécaniques des pièces tout en minimisant l'impact économique sur le coût de la matière première.

Selon une autre caractéristique, le second composé présente un module de flexion notamment supérieur à 20 000 MPa, de préférence supérieur à 25 000 MPa. Le second composé est également compatible avec le premier composé. A l'état fondu, le mélange des deux composés est un mélange homogène.

De préférence, le second composé est fabriqué par extrusion. Comme précédemment décrit, outre les fibres, des additifs peuvent être présents dans la matière plastique du second composé.

Dans un mode de réalisation de l'invention, la matrice thermoplastique du second composé est choisie parmi du PP, du PA6, ou du PA66.

De préférence, les fibres de carbone du second composé ont une proportion comprise entre 30% et 50%, et de préférence de 40%, massique par rapport à la masse du second composé. Les fibres végétales sont de préférence ajoutées dans le second composé entre 20 et 40% massique par rapport à la masse du second composé.

La matrice thermoplastique du second composé est choisie en fonction de la quantité maximale de fibres de carbone pouvant être incorporée dans ladite matrice thermoplastique, cette quantité maximale dépendant des propriétés physiques de la matrice, en particulier de ses propriétés de viscosité et de mouillabilité. La plupart des produits commercialisés sous la forme d'une matrice thermoplastique incorporant des fibres de carbone présente un pourcentage maximal de fibres de carbone de 40%, ce qui se traduit par des valeurs de modules de flexion (module d'élasticité en flexion) du second composé qui sont différentes selon le type de matrice employée. Un composé comprenant une matrice de PP incorporant 40% de fibres de carbone possède un module de flexion de 19 000 MPa, tandis qu'avec le même taux de 40 % de fibres de carbone, un composé à base d'une matrice en PA6 possède un module de flexion de 31 000 MPa.

Par conséquent, pour des pièces moulées devant présenter un très haut module de flexion, il sera privilégié un second composé dont la matrice thermoplastique est du PA6.

Aussi, l'invention est avantageusement relative à l'utilisation du matériau de l'invention pour remplacer de préférence du PP homo ou PP copo, ou du PA6 ou PA66 (matrices chargées ou non) dans la fabrication de produits moulés allégés, notamment le produit moulé à partir dudit matériau présentant un allégement réduit de 8 à 30 % par rapport à la matrice à substituer, et présentant en particulier un module de flexion compris entre 800 et 15 000 MPa et une contrainte à la rupture en traction d'au moins 30 MPa.

Lorsque les fibres sont des fibres végétales, les premier et second composés seront adaptés dans leur proportion en fonction du module de flexion à atteindre (tout en s'attachant à conserver une quantité minimale de fibres naturelles supérieure à 15% pour conserver le caractère de « matériau vert »). Par exemple pour un produit davantage vert, les proportions seront de 25 % pour le premier composé et 75% pour le second composé.

L'invention concerne également un procédé de fabrication du matériau de l'invention, comportant les étapes suivantes :
- apport d'un premier composé sous forme de granulés comportant de la matière thermoplastique et des billes de verre creuses, et de préférence des additifs fonctionnels (procurant des propriétés mécaniques au produit final),
- apport d'un second composé sous forme de granulés comportant de la matière thermoplastique et des fibres telles que des fibres de carbone ou des fibres végétales,
- mélange des premier et second composés dans un mélangeur dit automatique du type comprenant des doseurs tels que des doseurs pondéraux.

Le mélangeur automatique permet de doser en continu deux matériaux sous forme de granulés disposés dans deux trémies. Ce dosage continu est réalisé à l'aide de doseurs de type doseurs pondéraux. Les matières dosées sont ensuite mélangées intimement avant d'être convoyées vers le système d'alimentation en granulés de la presse à injecter.

Selon une caractéristique, le procédé selon l'invention intègre une étape préalable de fabrication du premier composé par la technologie d'extrusion BUSS.

La technologie BUSS, connue de l'homme de l'art, permet le mélange et l'homogénéisation intime par fusion des constituants du composé, et réduit les contraintes de cisaillement par rapport aux systèmes mono ou double vis largement connus de l'homme de l'art. La technologie BUSS permet de limiter la casse des billes de verre creuses lors de l'extrusion car les phases de mélange et de convoyage du composé sont séparées, en présentant d'une part une vis de mélange et une vis de convoyage. Cette technologie BUSS est utilisée selon l'invention exclusivement pour le premier composé et surtout sans apporter lors de la phase d'extrusion les fibres qui doivent être présentes dans le matériau final de l'invention.

De préférence, les paramètres utilisés lors de l'extrusion du premier composé sont les suivants :
- température du matériau de la matrice du premier composé correspondant à la température de mise en œuvre dudit matériau, telle qu'entre 170°C et 200°C pour une matrice en PP homo ou PP copo, entre 200°C et 240 °C pour une base de matrice PA6,et entre 240 °C et 270 °C pour une base de matrice de PA66 ;
- vitesse de rotation de la vis entre 100 rpm et 200 rpm, de préférence de l'ordre de 150 rpm,
- introduction des microsphères dans la vis de mélange au plus proche de la vis de convoyage (et donc au plus loin de la zone de mélangeage des matières du premier composé hors billes) afin de réduire le temps de séjour des billes dans l'extrudeuse,
- débit de sortie du premier composé, de 10 à 15 kg/h sur un diamètre de vis de 46 mm.

En utilisant ces conditions de procédé de mise en œuvre avec la technologie BUSS, il est possible d'obtenir des taux de casse en microsphères de verre creuses qui ne sont que de 5% à 10%, alors que par extrusion classique le taux de casse est largement supérieur à 10%. L'invention concerne en outre l'utilisation du matériau selon l'invention pour la fabrication de pièces moulées par injection, notamment des pièces pour véhicules automobiles, ferroviaires, nautiques, aéronautiques. L'invention a également trait à un procédé de fabrication par moulage par injection.

Dans un mode de réalisation de l'invention, le matériau est transformé par toute les technologies d'injection connues de l'homme de l'art, telles que traditionnelle, injection dite « 2K », injection dite « 3K », injection dite « sandwich », ou encore séquentielle, de manière à obtenir une pièce moulée. Le matériau formant un mélange à froid des premier et second composés est fondu dans une presse à injection, de préférence l'injection étant traditionnelle ou pouvant comprendre une étape, lors de l'alimentation du matériau fondu jusqu'à un moule, l'introduction d'un gaz tel que N₂ ou CO_{2.}

Toutefois, selon l'invention, le procédé respecte des conditions particulières de mise en œuvre qui sont :
- augmenter la température du matériau de 10 à 20°C par rapport aux préconisations pour des matières thermoplastiques non chargées, soit par exemple une utilisation de températures entre 220°C et 260°C pour un PP homo ou copo ;
- augmenter la température de l'empreinte du moule, par rapport aux préconisations pour des matières thermoplastiques non chargées afin que le gradient de température entre la surface du moule et le matériau injecté soit inférieur à 30°C ; utilisation par exemple de températures pour l'outillage entre 30°C et 60°C pour un PP homo ou copo et de préférence de 50 °C,
- suppression de la phase de maintien.

On rappelle que la phase de maintien est une étape usuelle dans le procédé d'injection traditionnel, qui consiste à poursuivre l'alimentation de matière pour compenser le retrait de la matière dans le moule pendant le refroidissement. Selon l'invention, cette phase de maintien est supprimée.

Ce nouveau matériau obtenu par le procédé de fabrication de l'invention permet très avantageusement d'utiliser la technologie traditionnelle d'injection et d'obtenir de très bons résultats de finition des pièces moulées, en particulier en supprimant les défauts d'aspect de type retassures,

Selon un autre type encore d'injection connue, le procédé de fabrication par injection utilise la technologie MuCell®, participant de manière complémentaire à l'allègement des pièces produites.

Dans une variante des conditions associées à l'injection, l'injection est réalisée non seulement avec les conditions particulières d'injection détaillées ci-dessus au regard de la hausse de la température du matériau et la suppression de la phase de maintien, mais également en injectant dans un moule dont la température de surface de l'empreinte a été augmentée par chauffage par induction de 50°C à60°C au dessus de la température conventionnelle de démoulage. Dès la fin de remplissage de la cavité, le chauffage du moule est stoppé et le moule est refroidi par recirculation d'eau. La trempe ainsi créée sur la matière thermoplastique va générer un effet de surface brillant (appelé « black piano ») et éliminer les lignes de soudure.

Ainsi, toutes ces conditions de fabrication de la matière à injecter puis du procédé de moulage tendent à limiter la casse des microsphères de verre creuses pendant l'injection et à procurer des pièces notablement allégées, résistantes mécaniquement et sans défaut d'aspect.

D'autres caractéristiques et avantages de la présente invention apparaitront dans la description qui suit à l'aide d'exemples uniquement illustratifs et nullement limitatifs de la portée de l'invention et en regard des illustrations ci-jointes dans lesquelles :
- La figure 1 est un organigramme descriptif des différentes étapes du procédé de fabrication de pièces moulées selon la présente invention ;
- La figure 2 illustre un dispositif de fabrication de pièces moulées par injection à partir du matériau de l'invention ;
- La figure 3 montre l'étape finale d'ouverture du moule et de libération de la pièce moulée à partir du matériau de l'invention.

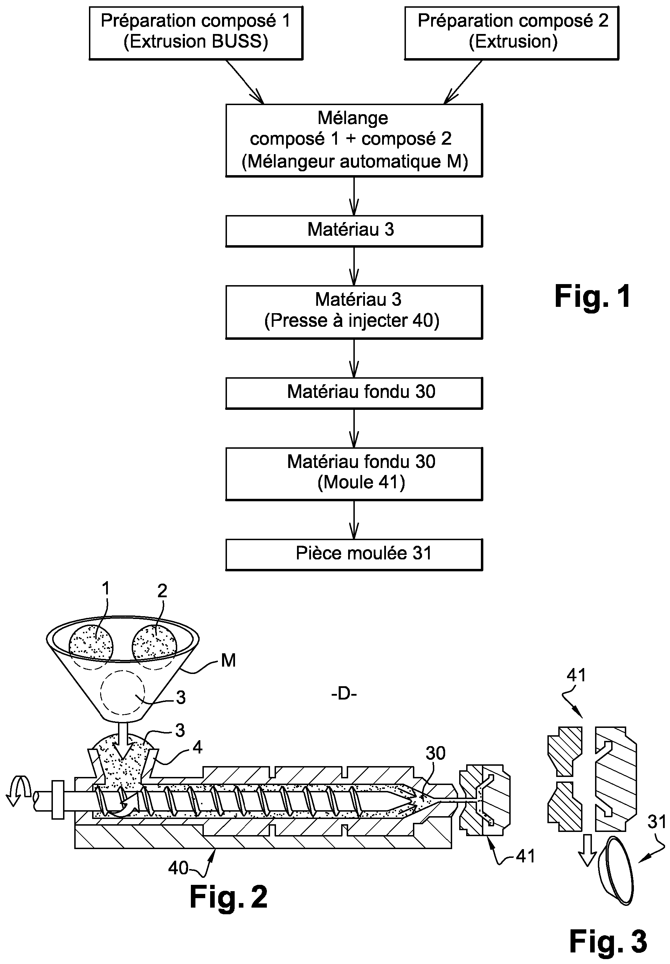

La figure 1 schématise les étapes du procédé de fabrication de l'invention en regard du dispositif de fabrication D de la figure 2.

Le matériau 3 de l'invention comporte deux composés distincts, un premier composé 1 sous forme de granulés obtenus par extrusion, de préférence extrusion BUSS, et un second composé 2 sous forme de granulés obtenus par extrusion qui peut être conventionnelle (double ou simple vis). Les deux composés 1 et 2 sont mélangés à température ambiante dans un mélangeur automatique M pour constituer le matériau 3 de l'invention destiné à être injecté.

Dans les exemples de matériaux qui suivent, les fibres du second composé sont des fibres de carbone.

La nature de la matière thermoplastique utilisée dans le premier composé 1, est identique à la matrice thermoplastique de la matière à substituer.

Le premier composé 1 comprend de la matière thermoplastique (matrice de matière thermoplastique) telle qu'un polypropylène copo référencé 108MF97 de la société Sabic selon 61% en poids dudit composé, des billes de verre creuses intégrées dans la matrice, par exemple 22 % massique (par rapport au poids de l'ensemble du premier composé) de billes de verre creuses de densité 0,46, les billes étant référencées iM16K commercialisées par la société 3M, 5% en masse dudit composé d'additifs dits « interfaciaux », du type Fusabond P353 de la société DuPont de Nemours, 8% en masse dudit composé d'agents de modification de la résistance au choc, par exemple Engage 8137 de la société Dow et 4% en masse du composé d'un colorant sous forme d'un mélange maître (« masterbatch »), par exemple 01283 UN 25 de Clariant pour un colorant noir universel.

Préalablement le premier composé 1 sous forme de granulés a été avantageusement fabriqué par la technologie d'extrusion BUSS, en mélangeant la matière thermoplastique avec les billes de verre creuses et les divers additifs.

Avantageusement, les paramètres utilisés lors de l'extrusion BUSS du premier composé sont les suivants :
- température de la matière thermoplastique entre 170°C et 200°C,
- alimentation de la vis en amont avec la matière thermoplastique et des additifs fonctionnels,
- introduction des billes de verre dans la vis en aval de la matière thermoplastique et des additifs fonctionnels, les billes de verre étant introduites au plus près de la vis de convoyage,
- vitesse de rotation de la vis de 150 rpm ;
- débit de sortie du premier composé au niveau de la vis, de 10 à 15 kg/h sur un diamètre de vis de 46 mm.

Le second composé comprend une matrice de matière thermoplastique composée de manière préférée de PA6 et 40% en masse dudit second composé de fibres de carbone. Ce second composé est le produit référencé commercialement B3 ICF 40 par la société Akro Plastic.

Selon l'invention, en regard de la figure 1, le premier composé 1 et le second composé 2 sont apportés séparément dans un mélangeur automatique M du type connu en soi.

Les figures 2 et 3 illustrent un dispositif de fabrication D de pièces moulées 31 par injection à partir du matériau 3 de l'invention.

Comme indiqué précédemment, les deux composés 1 et 2 sont mélangés dans le mélangeur automatique M pour constituer le matériau 3 de l'invention directement introduit au niveau d'une trémie 4 d'alimentation d'une presse à injecter 40 qui injecte le matériau de l'invention à l'état fondu 30 dans un moule 41.

L'injection dans le moule 41 est faite selon au moins les conditions particulières d'injection suivantes :
- L'injection est réalisée avec une température pour la matière plus élevée, de préférence de 10°C à 20°C de plus que celle habituellement utilisée pour des thermoplastiques non chargés de même nature, soit par exemple une utilisation de températures entre 220°C et 260°C pour un PP homo ou copo.
- L'injection est réalisée avec une température légèrement plus élevée pour le moule afin que le gradient de température entre la surface du moule et le matériau injecté soit inférieur à 30°C.
- La phase de maintien est supprimée.

Le moule 41 est ensuite ouvert afin de libérer la pièce moulée 31 à partir du matériau de l'invention 3 (figure 3).

Sont à présent décrits plusieurs exemples de matériau de l'invention (exemple 1 à 5), le but étant de substituer ces exemples à des matériaux usuels employés dans le marché automobile (exemples comparatifs 1 à 5) de fabrication de pièces moulées par injection, de sorte à rendre ces pièces plus légères avec des performances mécaniques aussi bonnes que les pièces en matériau connu/usuel.

Une même pièce a été moulée respectivement avec le matériau usuel, et avec le matériau de l'invention, les paramètres du procédé d'injection étant identiques.

Des mesures ont été faites pour chaque pièce au regard du poids, du module de flexion ou de traction, de la contrainte à la rupture en traction et de la résistance aux chocs.

La mesure du poids est réalisée par pesée.

Les données fournies pour les exemples comparatifs (matériau usuel) sont celles fournies par le fabricant du matériau.

Les données fournies pour les matériaux de l'invention : les mesures du module de flexion ou du module de traction sont effectuées selon la norme ISO 178 ; les mesures de contrainte à la rupture en traction et de résistance aux chocs sont réalisées respectivement selon les normes ISO 527-2 et ISO 180.

### EXEMPLE 1 :

L'exemple 1 du matériau de l'invention consiste à se substituer au matériau dénommé ici PP TD 20 ou Excomp1 (pour exemple comparatif 1) qui correspond au produit référencé commercialement en tant que HMU 202 par Exxon Mobil, formé à base de PP homo et 20% de talc en tant que charge structurante.

Le matériau-mélange de l'exemple 1 de l'invention dénommé Ex1 utilisé en tant que matériau allégé pour se substituer au matériau PP TD 20 est composé de 90% du premier composé et 10% du second composé. Le premier composé et le second composé correspondent à ceux cités plus haut pour l'exemple de l'invention.

Le premier composé comprend du PP homo référencé PPC 3150 MX5 de la société Total Petrochemicals selon 61% en poids dudit composé, 22 % massique de billes de verre creuses iM16K commercialisées par la société 3M, 5% en masse de Fusabond P353 de la société du Pont de Nemours, 8% en masse de Engage 8137 de la société Dow et 4% en masse de 01283 UN 25 de Clariant. Le second composé comporte du PA6 et 40% de fibres de carbone, produit commercialisé par la société Akro Plastic sous la référence B3 ICF 40.

Les caractéristiques du mélange allégé Ex1 par rapport à celles de Excomp1 sont listées dans le tableau suivant (tableau 1).

**Tableau 1**

| | Excomp1 | Ex1 |
|---|---|---|
| Densité | 1,04 | 0,79 |
| Allègement par rapport à l'exemple comparatif | - | -24,3% |
| Module de traction (MPa) | 3100 | 2570 |
| Contrainte à rupture en traction (MPa) | 31 | 26,1 |
| Energie choc (éprouvettes non entaillées, 23°C, kJ/m²) | 19,6 | 23,4 |
| Energie choc (éprouvettes entaillées, 23°C, kJ/m²) | 3 | 5,2 |

On constate que pour un gain de poids de 24,3%, les performances mécaniques sont conservées, le module de traction, la contrainte à la rupture à la traction et les énergies d'impact présentant des valeurs respectives très proches de celles de la matière à substituer.

EXEMPLE 2 : Substitution du matériau de l'exemple comparatif Excomp2 correspondant au produit commercialisé sous la référence SR 64N S11 par Total Petrochemicals, et comprenant une matrice PP copo et 15% de charges minérales, telles que du talc.

Le mélange allégé exemple 2 (Ex2) de l'invention pour se substituer à l'exemple comparatif Excomp2, est composé de 96% du premier composé à base de PP copo et 4% du second composé. Les premier et second composés correspondent à ceux de l'exemple 1.

Les caractéristiques du mélange allégé Ex2 par rapport à celles de l'exemple comparatif Excomp2 sont listées dans le tableau suivant (tableau 2).

**Tableau 2**

| | Excomp2 | Ex2 |
|---|---|---|
| Densité | 1 | 0,78 |
| Allègement par rapport à l'exemple comparatif | - | -22% |
| Module de flexion (MPa) | 1750 | 1756 |
| Contrainte à rupture en | 14 | 13,9 |
| traction (MPa) | | |
| Energie choc (éprouvettes non entaillées, 23°C, kJ/m²) | Donnée non disponible | 35,6 |
| Energie choc (éprouvettes entaillées, 23°C, kJ/m²) | 30 | 13,4 |

On constate que pour un gain de poids de 22%, les performances mécaniques sont conservées, le module de flexion et la contrainte à la rupture présentent des valeurs identiques. En outre, la tenue à l'impact reste satisfaisante.

EXEMPLE 3 : Substitution du matériau de l'exemple comparatif Excomp3 correspondant au produit commercialisé sous la référence GB311U par Borealis, et comprenant une matrice PP homo et 30% de fibres de verre courtes.

Le mélange allégé exemple 3 (Ex3) de l'invention pour se substituer à l'exemple comparatif Excomp3 est composé de 65% du premier composé à base de PP homo et 35% du second composé. Les premier et second composé correspondent à ceux de l'exemple 1.

Les caractéristiques du mélange allégé Ex3 par rapport à celles de l'exemple comparatif Excomp3 sont listées dans le tableau suivant (tableau 3).

**Tableau 3**

| | Excomp3 | Ex3 |
|---|---|---|
| Densité | 1,12 | 0,88 |
| Allègement par rapport à l'exemple comparatif | - | -21,1% |
| Module de flexion (MPa) | 6800 | 6281 |
| Contrainte à rupture en traction (MPa) | 97 | 51,7 |
| Energie choc (éprouvettes | 50 | 16,6 |
| non entaillées, 23°C, kJ/m²) | | |
| Energie choc (éprouvettes entaillées, 23°C, kJ/m²) | 11 | 3,2 |

En moyenne, les modules de flexion entre le matériau à substituer et le mélange allégé sont proches. Le matériau de l'invention présente un caractère ductile moins important que la matière à substituer mais suffisant. Le gain d'allègement est d'environ 20%.

EXEMPLE 4 : Substitution du matériau de l'exemple comparatif Excomp4 correspondant au produit commercialisé sous la référence Capron BN50 G6 HS BK 5830 par BASF et comprenant une matrice PA6 et 30% de fibres de verre.

Le mélange allégé exemple 4 (Ex4) de l'invention pour se substituer à l'exemple comparatif Excomp4 est composé de 72% du premier composé et 28% du second composé. Le premier composé a pour matière thermoplastique du PA6 et les billes de verre représentent 22% en masse de ce premier composé. Les billes de verre utilisées correspondent au produit iM16K commercialisées par la société 3M ; elles ont une densité de 0,46. Le second composé comporte du PA6 et 40% de fibres de carbone ; il s'agit du produit commercialisé par la société Akro Plastic sous la référence B3 ICF 40.

Les caractéristiques du mélange allégé Ex4 par rapport à celles de l'exemple comparatif Excomp4 sont listées dans le tableau suivant (tableau 4).

**Tableau 4**

| | Excomp4 | Ex4 |
|---|---|---|
| Densité | 1,36 | 1,00 |
| Allègement par rapport à | - | -26,5 |
| l'exemple comparatif | | |
| Module de flexion (MPa) | 7600 | 7952 |
| Contrainte à rupture en traction (MPa) | 150 | 97 |
| Energie choc (éprouvettes non entaillées, 23°C, kJ/m²) | 58 | 39 |
| Energie choc (éprouvettes entaillées, 23°C, kJ/m²) | 8 | 10,2 |

On constate que les propriétés mécaniques du mélange allégé (avec une performance d'allègement de 26,5%) sont proches de celles de la matière à substituer.

EXEMPLE 5 : Substitution du matériau de l'exemple comparatif Excomp5 correspondant au produit commercialisé sous la référence LNP Thermotuf VF004S compound par Sabic Innovative Plastic et comprenant une matrice PA66 et 20% de fibres de verre.

Le mélange allégé exemple 5 (Ex5) de l'invention pour se substituer à l'exemple comparatif Excomp5 est composé de 79% du premier composé et 21% du second composé. Le premier composé a pour matière thermoplastique du PA66 et les billes de verre représentent 22% en masse de ce premier composé. Les billes de verre utilisées correspondent au produit iM16K commercialisées par la société 3M ; elles ont une densité de 0,46. Ces billes correspondent au produit iM16K de 3M. Le second composé comporte du PA6 et 40% de fibres de carbone ; il s'agit du produit commercialisé par la société Akro Plastic sous la référence B3 ICF 40.

Les caractéristiques du mélange allégé Ex5 par rapport à celles de l'exemple comparatif Excomp5 sont listées dans le tableau suivant (tableau 5).

**Tableau 5**

| | Excomp5 | Ex5 |
|---|---|---|
| Densité | 1,23 | 0,91 |
| Allègement par rapport à l'exemple comparatif | - | -25,9% |
| Module de flexion (MPa) | 5080 | 5660 |
| Contrainte à rupture en traction (MPa) | 97 | 72 |
| Energie choc (éprouvettes non entaillées, 23°C, kJ/m²) | 43 | 31 |
| Energie choc (éprouvettes entaillées, 23°C, kJ/m²) | 12 | 5,9 |

On constate que les propriétés mécaniques du mélange allégé (avec une performance d'allègement de 25,9%) sont proches de celles de la matière à substituer.

Par conséquent, les exemples de l'invention et exemples comparatifs montrent que les matériaux de l'invention fournissent des pièces allégées, en particulier de l'ordre de 20 à 30 %, tout en présentant des performances mécaniques et de résistance aux chocs équivalentes.

Les exemples ci-dessus ont montré que le procédé de l'invention permet de remplacer des matériaux usuels d'obtenir des pièces allégées tout en conservant les propriétés mécaniques requises quand l'application l'exige.

L'exemple suivant est destiné à montrer que le procédé de l'invention garantit des performances d'allègement des produits moulés par rapport à des produits moulés à partir d'un matériau comparatif de l'art antérieur comprenant des billes des verre et obtenu par le procédé d'extrusion BUSS.

Ainsi, un exemple 6 (Ex6) de matériau de l'invention a été préparé par le procédé de l'invention à partir
- d'un premier composé sous forme de granulés et fabriqué par extrusion BUSS à partir de PA6 et 22% de microsphères de verre creuses ;
- d'un second composé fait de granulés en PA6 et de fibres de carbone, le second composé ayant été mélangé à un taux de 31 % massique au premier composé avant injection.

Un exemple de matériau comparatif 6 (Excomp6) a été fabriqué par extrusion BUSS à partir de PA6, de 22% de billes de verre, et de granulés (31% massique par rapport au total en poids de PA6 seul et de billes de verre) en PA6 et de fibres de carbone (second composé de l'exemple 6) : dans la vis d'extrusion ont été apportés cumulativement l'ensemble des composés du matériau, c'est-à-dire les granulés de PA6, les divers additifs ainsi que les granulés en PA6 avec fibres de carbone, puis les billes de verre juste avant la vis de convoyage.

Le matériau extrudé obtenu Excomp6 est ensuite utilisé dans les mêmes conditions d'injection que le matériau mélangé de l'invention pour obtenir un produit moulé.

Le poids des deux produits moulés à partir respectivement du matériau de l'invention et du matériau comparatif a été mesuré. Le produit de l'exemple 6 présente un allégement supplémentaire de l'ordre de 5 % par rapport au produit fait à partir de l'exemple comparatif 6.

Après des calculs en soi connu du taux de casses de billes à partir de la proportion volumique des constituants et de la densité du produit final, il ressort que le taux de casse de billes de verre est d'environ 40% lorsque le second composé comprenant les fibres de carbone est mélangé lors de la phase d'injection alors qu'il atteint 80% lorsque le second composé est introduit lors de la phase d'extrusion BUSS.

Par conséquent, bien que la technologie d'extrusion BUSS soit particulièrement adaptée pour limiter la casse des billes, les exemples 6 et Excomp6 montrent que la procédé de l'invention, qui consiste non pas à mélanger directement l'ensemble des composés du matériau final en extrudant par la technologie BUSS, mais en mélangeant deux composés fabriqués préalablement et séparément, dont le premier composé contenant les billes de verre via la technologie BUSS et le second composé contenant des fibres, procure des pièces plus légères par une diminution conséquente de casse des billes de verre.

## Revendications

1. Procédé de fabrication d'un matériau destiné à l'injection plastique, comportant de la matière thermoplastique, des billes de verre creuses et des fibres, comportant les étapes suivantes :
- apport d'un premier composé sous forme de granulés obtenus par extrusion selon le procédé BUSS comportant de la matière thermoplastique et des billes de verre creuses, et de préférence des additifs fonctionnels, les billes de verre creuses présentant une densité de 0,46, la teneur en billes de verre creuses étant entre 15 et 30% massique du premier composé,
- apport d'un second composé sous forme de granulés comportant de la matière thermoplastique et des fibres telles que des fibres de carbone ou des fibres végétales,
- mélange des premier et second composés dans un mélangeur automatique.

2. Procédé selon la revendication précédente, **caractérisé en ce que** les paramètres suivants sont utilisés lors de l'extrusion selon le procédé BUSS :
- température du matériau de la matrice du premier composé correspondant à la température de mise en oeuvre dudit matériau, telle qu'entre 170°C et 200°C pour une matrice en PP homo ou PP copo, entre 200°C et 240 °C pour une base de matrice PA6, et entre 240°C et 270 °C pour une base de matrice de PA66 ;
- vitesse de rotation de la vis entre 100 rpm et 200 rpm, de préférence de l'ordre de 150 rpm,
- introduction des microsphères dans la vis de mélange au plus proche de la vis de convoyage afin de réduire le temps de séjour des billes dans l'extrudeuse,
- débit de sortie du premier composé, de 10 à 15 kg/h sur un diamètre de vis de 46 mm.

3. Matériau destiné à l'injection plastique, comportant de la matière thermoplastique, des billes de verre creuses et des fibres, **caractérisé en ce qu'**il comporte un mélange des deux composés suivants :
- un premier composé sous forme de granulés obtenus par extrusion selon le procédé BUSS comportant de la matière thermoplastique et des billes de verre creuses, et de préférence des additifs fonctionnels, les billes de verre creuses présentant une densité de 0,46, la teneur en billes de verre creuses étant entre 15 et 30% massique du premier composé,
- un second composé sous forme de granulés comportant de la matière thermoplastique et des fibres telles que des fibres de carbone ou des fibres végétales.

4. Matériau selon la revendication 3, **caractérisé en ce que** les billes de verre creuses présentent une tenue de résistance à la pression d'au moins 1000 bar.

5. Matériau selon la revendication 3 ou 4, **caractérisé en ce que** la teneur en billes de verre creuses est entre 20 et 25% et de manière préférée de 22% massique du premier composé.

6. Matériau selon l'une quelconque des revendications 3 à 5, **caractérisé en ce que** la matière thermoplastique du premier composé est choisi parmi les matières suivantes, prises seules ou en combinaison, polypropylène homopolymère ou copolymère (PP homo ou PP copo), polyamide 6 ou 66 (PA6 ou PA66), ou tout autre matrice de matériau, de préférence semi cristallin, ou amorphe tel qu'à base de acrylonitrile butadiène styrène et polyamide (ABS PA), ou de acrylonitrile butadiène styrène et polycarbonate (ABS PC).

7. Matériau selon l'une quelconque des revendications 3 à 6, **caractérisé en ce que** la matière thermoplastique du premier composé et/ou du second composé comprend des additifs pour présenter des propriétés fonctionnelles telles que la tenue aux ultraviolets, à l'oxydation, de tenue thermique, ou d'hydrolyse ou de résistance aux chocs, ou encore permettre la coloration du produit moulé final, de préférence la teneur de chaque additif est comprise entre 4% et 8% par rapport à la masse du composé contenant l'additif, de préférence la quantité totale d'additifs dans chaque composé étant limitée à 17% massique par rapport à la masse dudit composé.

8. Matériau selon l'une quelconque des revendications 3 à 7, **caractérisé en ce que** les fibres sont des fibres de carbone dont la proportion dans le second composé est comprise entre 30% et 50%, et de préférence de 40% massique par rapport à la masse du second composé.

9. Matériau selon l'une quelconque des revendications 3 à 7, **caractérisé en ce que** les fibres sont des fibres végétales du type fibres de cellulose, bois, chanvre, miscanthus, noyaux d'olive.

10. Matériau selon l'une quelconque des revendications 3 à 9, **caractérisé en ce que** le second composé présente un haut module de flexion, déterminé selon la norme ISO 178, supérieur à 10 000 MPa, de préférence supérieur à 20 000 MPa, notamment la matrice thermoplastique du second composé est choisie parmi du PP, du PA6, ou du PA66.

11. Utilisation du matériau selon l'une quelconque des revendications 3 à 10, pour la fabrication de pièces moulées par injection, notamment des pièces pour véhicules automobiles, ferroviaires, nautiques, aéronautiques.

12. Utilisation selon la revendication précédente, **caractérisée en ce que** le matériau remplace du PP homo ou PP copo, ou du PA6 ou PA66 dans la fabrication d'un produit moulé à partir dudit matériau présentant un allégement réduit de 8 à 30 % par rapport à la matrice à substituer, en particulier de 20 à 30%, et présentant en particulier un module de flexion compris entre 800 et 15 000 MPa et une contrainte à la rupture en traction d'au moins 30 MPa.

13. Procédé de fabrication par moulage par injection à partir du matériau selon l'une quelconque des revendications 3 à 10, **caractérisé en ce que** le matériau formant un mélange à froid des premier et second composés est fondu dans une presse à injection, de préférence l'injection étant traditionnelle ou pouvant comprendre une étape, lors de l'alimentation du matériau fondu jusqu'à un moule, l'introduction d'un gaz tel que N₂ ou CO_{2.}

14. Procédé de fabrication par moulage par injection selon la revendication précédente ou à partir du matériau selon l'une quelconque des revendications 3 à 10, **caractérisé en ce que** le matériau formant un mélange à froid des premier et second composés est fondu dans une presse à injecter, le matériau fondu étant acheminé pour être injecté dans un moule, et **en ce que** le procédé est tel que l'injection est réalisée avec au moins les conditions suivantes :
- augmentation de la température du matériau de 10 à 20°C par rapport aux préconisations pour des matières thermoplastiques non chargées, en particulier une utilisation de températures entre 220°C et 260°C pour un PP homo ou copo ;
- augmentation de la température de l'empreinte du moule, par rapport aux préconisations pour des matières thermoplastiques non chargées afin que le gradient de température entre la surface du moule et le matériau injecté soit inférieur à 30°C; notamment utilisation de températures pour l'outillage entre 30°C et 60°C pour un PP homo ou copo et de préférence de 50°C,
- suppression de la phase de maintien.

15. Procédé de fabrication par moulage par injection selon la revendication 13 ou à partir du matériau selon l'une quelconque des revendications 3 à 10, **caractérisé en ce que** le matériau formant un mélange à froid des premier et second composés est fondu dans une presse à injecter, le matériau fondu étant acheminé pour être injecté dans un moule, et **en ce que** le procédé est tel que l'injection est réalisée avec au moins les conditions suivantes :
- augmentation de la température du matériau de 10 à 20°C par rapport aux préconisations pour des matières thermoplastiques non chargées, en particulier une utilisation de températures entre 220°C et 260°C pour un PP homo ou copo ;
- augmentation de la température de surface de l'empreinte du moule par chauffage par induction de 50°C à 60°C au dessus de la température conventionnelle de démoulage, et dès la fin de remplissage de la cavité, arrêt du chauffage du moule refroidissement du moule par recirculation d'eau ;
- suppression de la phase de maintien.

## Patentansprüche

1. Verfahren zur Herstellung eines Materials, das zum Kunststoff-Spritzgießen bestimmt ist, das thermoplastische Materie, hohle Glasperlen und Fasern beinhaltet, die folgenden Schritte beinhaltend:
- Beibringen einer ersten Zusammensetzung in Form von Granulaten, die durch Extrudieren gemäß dem BUSS-Verfahren erhalten werden, die thermoplastische Materie und hohle Glasperlen, und vorzugsweise funktionelle Additive beinhaltet, wobei die hohlen Glasperlen eine Dichte von 0,46 aufweisen, wobei der Gehalt an hohlen Glasperlen zwischen 15 und 30 Ma.-% der ersten Zusammensetzung liegt,
- Beibringen einer zweiten Zusammensetzung in Form von Granulaten, die thermoplastische Materie und Fasern, wie Kohlenstofffasern oder Pflanzenfasern beinhaltet,
- Mischen der ersten und zweiten Zusammensetzung in einem automatischen Mischer.

2. Verfahren nach dem vorstehenden Anspruch, **dadurch gekennzeichnet, dass** die folgenden Parameter beim Extrudieren gemäß dem BUSS-Verfahren verwendet werden:
- Temperatur des Materials der Matrix der ersten Zusammensetzung entsprechend der Anwendungstemperatur des Materials, wie zwischen 170 °C und 200 °C, für eine Matrix aus PPH oder PPC, zwischen 200 °C und 240 °C für eine PA6 Matrixbasis, und zwischen 240 °C und 270 °C für eine PA66 Matrixbasis;
- Drehgeschwindigkeit der Schnecke zwischen 100 U/min und 200 U/min, vorzugsweise in der Größenordnung von 150 U/min,
- Einbringen der Mikroperlen in die Mischschnecke möglichst nahe an der Förderschnecke, um die Aufenthaltsdauer der Perlen in dem Extruder zu verringern,
- Ausgaberate der ersten Zusammensetzung, von 10 bis 15 kg/h auf einem Schneckendurchmesser von 46 mm.

3. Material, das zum Kunststoff-Spritzgießen bestimmt ist, das thermoplastische Materie, hohle Glasperlen und Fasern beinhaltet, **dadurch gekennzeichnet, dass** es ein Gemisch aus den folgenden beiden Zusammensetzungen beinhaltet:
- eine erste Zusammensetzung in Form von Granulaten, die durch Extrudieren gemäß dem BUSS-Verfahren erhalten werden, die thermoplastische Materie und hohle Glasperlen, und vorzugsweise funktionelle Additive beinhaltet, wobei die hohlen Glasperlen eine Dichte von 0,46 aufweisen, wobei der Gehalt an hohlen Glasperlen zwischen 15 und 30 Ma.-% der ersten Zusammensetzung liegt,
- eine zweite Zusammensetzung in Form von Granulaten, die thermoplastische Materie und Fasern, wie Kohlenstofffasern oder Pflanzenfasern beinhaltet.

4. Material nach Anspruch 3, **dadurch gekennzeichnet, dass** die hohlen Glasperlen ein Festigkeitsverhalten gegenüber dem Druck von mindestens 1000 bar aufweisen.

5. Material nach Anspruch 3 oder 4, **dadurch gekennzeichnet, dass** der Gehalt an hohlen Glasperlen zwischen 20 und 25 Ma.-%, und vorzugsweise 22 Ma.-% der ersten Zusammensetzung beträgt.

6. Material nach einem der Ansprüche 3 bis 5, **dadurch gekennzeichnet, dass** die thermoplastische Materie der ersten Zusammensetzung aus den folgenden Materien, alleine oder in Kombination, Polypropylen Homopolymer oder Copolymer (PPH oder PPC), Polyamid 6 oder 66 (PA6 oder PA66) oder jede andere Materialmatrix, vorzugsweise halbkristallin, oder amorph wie auf Basis von AcrylnitrilButadien-Styrol und -Polyamid (ABS PA), oder AcrylnitrilButadien-Styrol und -Polykarbonat (ABS PC) ausgewählt wird.

7. Material nach einem der Ansprüche 3 bis 6, **dadurch gekennzeichnet, dass** die thermoplastische Materie der ersten Zusammensetzung und/oder der zweiten Zusammensetzung Additive umfasst, um funktionelle Eigenschaften, wie das Verhalten gegenüber UV, Oxidation, thermischem Verhalten oder Hydrolyse, oder Festigkeit gegenüber Stößen aufzuweisen, oder aber die Färbung des endgültigen Formprodukts zu ermöglichen, der Gehalt jedes Additivs vorzugsweise zwischen 4 % und 8 % in Bezug auf die Masse der das Additiv enthaltenden Zusammensetzung enthalten ist, wobei die Gesamtmenge an Additiven vorzugsweise die Gesamtmenge an Additiven in jeder Zusammensetzung auf 17 Ma.-% in Bezug auf die Masse der Zusammensetzung begrenzt ist.

8. Material nach einem der Ansprüche 3 bis 7, **dadurch gekennzeichnet, dass** die Fasern Kohlenstofffasern sind, deren Proportion in der zweiten Zusammensetzung zwischen 30 Ma.-% und 50 Ma.-% enthalten ist, und vorzugsweise 40 Ma.-% in Bezug auf die Lasse der zweiten Zusammensetzung ist.

9. Material nach einem der Ansprüche 3 bis 7, **dadurch gekennzeichnet, dass** die Fasern Pflanzenfasern in der Art von Fasern aus Cellulose, Holz, Hanf, Miscanthus, Olivenkernen sind.

10. Material nach einem der Ansprüche 3 bis 9, **dadurch gekennzeichnet, dass** die zweite Zusammensetzung ein hohes Biegemodul, entsprechend der Norm ISO 178 bestimmt, von mehr als 10.000 MPa, vorzugsweise von mehr als 20.000 MPa aufweist, insbesondere die thermoplastische Matrix der zweiten Zusammensetzung aus PP, PA6 oder PA66 ausgewählt ist.

11. Verwendung des Materials nach einem der Ansprüche 3 bis 10, zur Herstellung von Spritzgussteilen, insbesondere von Teilen für Kraft-, Bahn-, See- und Luftfahrzeuge.

12. Verwendung nach dem vorstehenden Anspruch, **dadurch gekennzeichnet, dass** das Material PPH, oder PPC oder PA6 oder PA66 bei der Herstellung eines Produkts ersetzt, das aus dem Material geformt ist, das eine um 8 bis 30 % in Bezug zur zu verdrängenden Matrix verringerte Erleichterung, insbesondere um 20 bis 30 % aufweist, und insbesondere ein Biegemodul, das zwischen 800 und 15.000 MPa enthalten ist, und eine Zugstreckgrenze von mindestens 30 MPa aufweist.

13. Verfahren zur Herstellung durch Spritzgießen aus dem Material nach einem der Ansprüche 3 bis 10, **dadurch gekennzeichnet, dass** das Material, das ein Kaltgemisch der ersten und zweiten Zusammensetzung bildet, in einer Spritzgießmaschine geschmolzen wird, wobei der Spritzguss vorzugsweise traditionell erfolgt oder bei der Zuführung des geschmolzenen Materials bis zur Form einen Schritt des Einbringens eines Gases, wie N₂ oder CO₂ umfassen kann.

14. Verfahren zur Herstellung durch Spritzgießen nach dem vorstehenden Anspruch, oder aus dem Material nach einem der Ansprüche 3 bis 10, **dadurch gekennzeichnet, dass** das Material, das ein Kaltgemisch der ersten und zweiten Zusammensetzung bildet, in einer Spritzgießmaschine geschmolzen wird, wobei das geschmolzene Material befördert wird, um in eine Form eingespritzt zu werden, und dadurch, dass das Verfahren dergestalt ist, dass die Einspritzung mindestens mit den folgenden Bedingungen realisiert wird:
- Erhöhen der Temperatur des Materials um 10 bis 20 °C in Bezug auf die Empfehlungen für nicht verstärkte thermoplastische Materien, insbesondere eine Verwendung von Temperaturen zwischen 220 °C und 260 °C für ein PPH oder PPC;
- Erhöhen der Temperatur des Formnestes in Bezug auf die Empfehlungen für nicht verstärkte thermoplastische Materien, damit der Temperaturgradient zwischen der Oberfläche der Form und dem eingespritzten Material kleiner als 30 °C ist; insbesondere Verwendung von Temperaturen für das Werkzeug zwischen 30 °C und 60 °C für ein PPH oder PPC, und vorzugsweise von 50 °C,
- Streichung der Haltephase.

15. Verfahren zur Herstellung durch Spritzgießen nach Anspruch 13, oder aus dem Material nach einem der Ansprüche 3 bis 10, **dadurch gekennzeichnet, dass** das Material, das ein Kaltgemisch der ersten und zweiten Zusammensetzung bildet, in einer Spritzgießmaschine geschmolzen wird, das geschmolzene Material befördert wird, um in eine Form eingespritzt zu werden, und dadurch, dass das Verfahren dergestalt ist, dass die Einspritzung mindestens mit den folgenden Bedingungen realisiert wird:
- Erhöhen der Temperatur des Materials um 10 bis 20 °C in Bezug auf die Empfehlungen für nicht verstärkte thermoplastische Materien, insbesondere eine Verwendung von Temperaturen zwischen 220 °C und 260 °C für ein PPH oder PPC;
- Erhöhen der Oberflächentemperatur des Formnestes durch Erhitzen durch Induktion von 50 °C auf 60 °C über die herkömmliche Ausformtemperatur, und unmittelbar ab dem Ende der Füllung des Hohlraumes, Beenden des Heizens der Form, Abkühlen der Form durch Wasserumlauf;
- Streichung der Haltephase.

## Claims

1. Method for producing a material for plastic injection, including thermoplastic material, hollow glass beads and fibres, including the following steps:
- supply of a first compound in the form of pellets obtained by extrusion according to the BUSS method, including thermoplastic material and hollow glass beads, and preferably functional additives, with the hollow glass beads having a density of 0.46, the content in hollow glass beads being between 15 and 30% by weight of the first compound,
- supply of a second compound in the form of pellets including thermoplastic material and fibres such as carbon fibres or plant fibres,
- mixture of the first and second compounds in an automatic mixer.

2. Method according to the preceding claim, **characterised in that** the following parameters are used during the extrusion according to the BUSS method:
- temperature of the material of the matrix of the first compound corresponding to the application temperature of said material, such that between 170°C and 200°C for a matrix in PP homo or PP copo, between 200°C and 240°C for a PA6 matrix base, and between 240°C and 270 °C for a PA66 matrix base;
- rotation speed of the screen between 100 rpm and 200 rpm, preferably of about 150 rpm,
- introduction of microspheres into the mixing screw as close as possible to the conveying screw so as to reduce the residence time of the beads in the extruder,
- output flow rate of the first compound, from 10 to 15 kg/h on a screw diameter of 46 mm.

3. Material for plastic injection, including thermoplastic material, hollow glass beads and fibres, **characterised in that** it includes a mixture of the following two compounds:
- a first compound in the form of pellets obtained by extrusion according to the BUSS method, including thermoplastic material and hollow glass beads, and more preferably functional additives, the hollow glass beads having a density of 0.46, the content in hollow glass beads being between 15 and 30% by weight of the first compound,
- a second compound in the form of pellets including thermoplastic material and fibres such as carbon fibres or plant fibres.

4. Material according to claim 3, **characterised in that** the hollow glass beads have a pressure resistance stress of at least 1000 bar.

5. Material according to claim 3 or 4, **characterised in that** the content in hollow glass beads is between 20 and 25% and preferably 22% by weight of the first compound.

6. Material according to any of claims 3 to 5, **characterised in that** the thermoplastic material of the first compound is chosen from the following materials, taken individually or in combination, polypropylene homopolymer or copolymer (PP homo or PP copo), polyamide 6 or 66 (PA6 or PA66), or any other material matrix, preferable semi-crystalline, or amorphous such as with a base of acrylonitrile butadiene styrene and polyamide (ABS PA), or of acrylonitrile butadiene styrene and polycarbonate (ABS PC).

7. Material according to any of claims 3 to 6, **characterised in that** the thermoplastic material of the first compound and/or of the second compound comprises additives in order to have functional properties such as resistance to ultraviolet light, oxidation, thermal resistance, or hydrolysis or resistance to impact, or to allow for the colouration of the final moulded product, preferably the content of each additive is comprised between 4% and 8% with respect to the weight of the compound containing the additive, preferably the total quantity of additives in each compound being limited to 17% by weight with respect to the mass of said compound.

8. Material according to any of claims 3 to 7, **characterised in that** the fibres are carbon fibres of which the proportion in the second compound is comprised between 30% and 50%, and preferably 40% by weight with respect to the weight of the second compound.

9. Material according to any of claims 3 to 7, **characterised in that** the fibres are plant fibres of the type of fibres of cellulose, wood, hemp, miscanthus, olive stones.

10. Material according to any of claims 3 to 9, **characterised in that** the second compound has a high flexural modulus, determined according to standard ISO 178, greater than 10,000 MPa, preferably greater than 20,000 MPa, in particular the thermoplastic matrix of the second compound is chosen from PP, PA6, or PA66.

11. Use of the material according to any of claims 3 to 10, for the production of injection-moulded parts, in particular parts for motor, rail, nautical, aeronautical vehicles.

12. Use according to the preceding claim, **characterised in that** the material replaces the PP homo or PP copo, or the PA6 or PA66 in the production of a moulded product from said material having an alleviation reduced from 8 to 30% with respect to the matrix to be substituted, in particular from 20 to 30%, and having in particular a flexural modulus comprised between 800 and 15,000 MPa and a tensile yield stress of at least 30 MPa.

13. Method for producing by injection moulding from a material according to any of claims 3 to 10, **characterised in that** the material forming a cold mix of the first and second compounds is melted in an injection press, preferably with the injection being conventional or able to comprise a step, during the alimentation of the melted material until a mould, the introduction of a gas such as N₂ or CO_{2.}

14. Method for producing by injection moulding according to the preceding claim or from a material according to any of claims 3 to 10, **characterised in that** the material forming a cold mix of the first and second compounds is melted in an injection press, the melted material being conveyed to be injected into a mould, and **in that** the method is such that the injection is carried out with at least the following conditions:
- increase in the temperature of the material from 10 to 20°C with respect to the recommendations for non-loaded thermoplastic materials, in particular a use of temperatures between 220°C and 260°C for a PP homo or copo;
- increase of the temperature of the cavity of the mould, in relation to the recommendations for non-loaded thermoplastic materials so that the temperature gradient between the surface of the mould and the injected material is less than 30°C; in particular use of temperatures for the tooling between 30°C and 60°C for a PP homo or copo and preferably 50°C,
- suppression of the holding phase.

15. Method for producing via injection moulding according to claim 13 or from a material according to any of claims 3 to 10, **characterised in that** the material forming a cold mix of the first and second compounds is melted in an injection press, the melted material being conveyed to be injected into a mould, and **in that** the method is such that the injection is carried out with at least the following conditions:
- increase in the temperature of the material from 10 to 20°C with respect to the recommendations for non-loaded thermoplastic materials, in particular a use of temperatures between 220°C and 260°C for a PP homo or copo;
- increase in the surface temperature of the cavity of the mould by induction heating from 50°C to 60°C above the conventional demoulding temperature, and immediately at the end of the filling of the cavity, stopping of the heating of the mould cooling of the mould by water recirculation;
- suppression of the holding phase.
